# EUROPEAN PATENT APPLICATION

(11) **EP 3 327 207 A1**
(43) Date of publication of application: **30.05.2018**
(21) Application number: 16830747.8
(22) Date of filing: 20.07.2016
(51) Int. Cl.: E03C 1/042

(54) **INSTALLATION STRUCTURE FOR FAUCET**

(30) Priority: 24.07.2015 KR 20150105213
(71) Applicant: Idin Lab, Inc., Gangnam-gu Seoul 06043 (KR)
(72) Inventor: KIM, Yong Kyoung, Seoul 06241 (KR); LEE, Do Kyeong, Seoul 04710 (KR)
(74) Representative: Zardi, Marco
(86) International application number: PCT/KR2016/007918
(87) International publication number: WO 2017/018714

(57) **Abstract**

An installation structure for a faucet is configured so that the faucet can be completely installed by simply inserting the faucet instead of tightening the faucet, and the faucet can be separated by holding and rotating the faucet by hand. Since the faucet can be installed by an insertion manner in a state that an angle of the faucet is adjusted as desired, it is possible to install the faucet while an angle of the faucet is being adjusted as desired. Further, since the faucet can be separated by holding and thus inserting or rotating the faucet by hand, it is possible to install and separate the faucet without any additional tool.

## Description

### TECHNICAL FIELD

The present invention relates to an installation structure for a faucet, and in particular, to an installation structure for a faucet configured such that a faucet can be installed or separated without an additional tool.

### BACKGROUND

A typical faucet is fixed to a connection body embedded in an indoor wall by a threaded engagement. The aforementioned faucet is disclosed in Korean Patent Application Publication No. 10-2010-0063411 entitled "Water supply unit having stop function" and published on June 11, 2010.

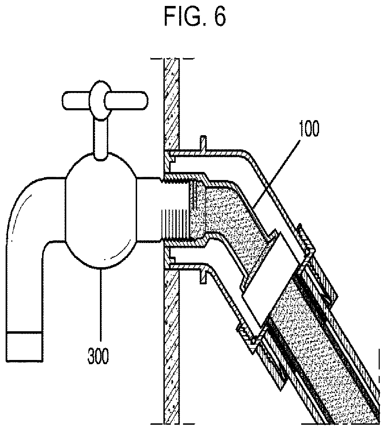

As shown in **FIG. 6**, such a water supply unit includes a water supply pipe for supplying water and a connection body 100 for discharging the supplied water. The connection body 100 is formed such that the water supply pipe for supplying water is connected to one side of the connection body 100 and a faucet 300 is connected to the opposite side of the connection body 100.

Such a connection body 100 is installed in an interior of a case embedded in the wall. The connection body 100 maintains in a firmly fixed state in the installed position such that the connection body is installed robustly with no movement, thereby supporting a faucet 300. At this time, the connection body 100 is connected to the faucet 300 by a threaded engagement. The faucet 300 has a fastening tube, which has threads thereon, such that the fastening tube is threadedly engaged with the connection body 100.

In this regard, there should be strong compression forces such that supplied water does not leak through a coupler between the fastening tube and the connection body. To this end, during a process of installing the faucet by the threaded engagement, the fastening tube formed on the faucet is strongly tightened until the faucet does not move any more. In some case, the faucet may stop in a position where the faucet has rotated further than the desired position or in a position where the faucet has rotated less than the desired position. This is because the faucet does not stop in an accurate position after completion of the coupling due to many parameters such as elasticity of components, the length of the threads, and the like.

Therefore, the coupling is completed in many cases after rotating the faucet more than is needed or after rotating the faucet less than is needed in order to accurately position the faucet. This involves a problem in that, when the faucet is tightened more than is needed, a sealing member receives excessive pressure and is damaged, and, when the faucet is tightened less than is needed, the sealing member is not sufficiently compressed to create appropriate pressure, resulting in the supplied water leaking.

Moreover, an additional tool is required to separate the faucet and nuts etc., in order to separate the faucet for maintenance after the faucet is completely installed. However, since workspace is often very narrow due to the location of the faucet, it is very difficult to use the additional tool.

### SUMMARY

It is an object of the present invention is to provide an installation structure for a faucet configured such that, the faucet can be installed while an angle of the faucet is being adjusted as desired. In is another object of the present invention is to provide an installation structure for a faucet configured so that the faucet can be easily installed and separated by separating the faucet without any additional tool

To achieve the aforementioned objects, the present invention proposes an installation structure for a faucet configured such that the faucet can be completely installed by simply inserting the faucet instead of tightening the faucet and the faucet can be separated by holding and rotating the faucet by hand.

According to the present invention, since the faucet can be installed by an insertion manner in a state that an angle of the faucet is adjusted as desired, it is possible to install the faucet while an angle of the faucet is being adjusted as desired. Further, since the faucet can be separated by holding and thus inserting or rotating the faucet by hand, it is possible to install and separate faucet without any additional tool.

### BRIEF DESCRIPTION OF THE DRAWINGS

**FIG. 1** is an exemplary exploded view illustrating an installation structure for a faucet according to the present invention.
**FIG. 2** is an exemplary sectional view illustrating the installation structure for a faucet according to the present invention.
**FIG. 3** is an exemplary view illustrating coupling relationships between a faucet and a connection body, between a pressure ring and a coupling pipe, and between a coupler and a fastening nut, according to the present invention.
**FIG. 4** is an exemplary view illustrating an operation of separating the coupling pipe from the coupler by rotating the faucet according to the present invention.
**FIG. 5** is an exemplary view illustrating an operation of separating the fastening nut from the coupler by rotating the faucet according to the present invention.
**FIG. 6** is an exemplary view illustrating a conventional installation structure for a faucet.

### DETAILED DESCRIPTION

The present invention seeks provide an installation structure for a faucet configured such that, when a faucet is installed, an angle of the faucet can be adjusted as desired and the faucet can be separated without any additional tool, thereby installing and separating conveniently the faucet.

To this end, the present invention proposes an installation structure for a faucet. A connection body, which connects a water supply pipe and a faucet so as to be communicated with each other, is provided to be accommodated in an accommodation space formed in an indoor wall.

A coupler is formed in the connection body and penetrates through a cover plate covering an opening of the accommodation space to be exposed to the outside. The fastening nut is fastened to the coupler, such that the connection body is supported.

A grab ring is installed in an interior of the coupler to hold the coupling pipe such that the coupling pipe does not fall out. The grab ring expands as the pressure ring installed in the coupling pipe is moved forward. Thus, the coupling pipe can be separated from the coupler.

A pressure ring is threadedly engaged with the coupling pipe so as to be tightened, when the faucet is rotated in a direction opposite to a direction in which the fastening nut is tightened. An outer periphery of the pressure ring and an inner periphery of the fastening nut are engaged with each other.

When the faucet is rotated in the direction in which the fastening nut is tightened, the pressure ring is moved forward and expands the grab ring. When the faucet is rotated in the opposite direction, the pressure ring is engaged with the fastening nut and is rotated, such that fastening nut is loosened.

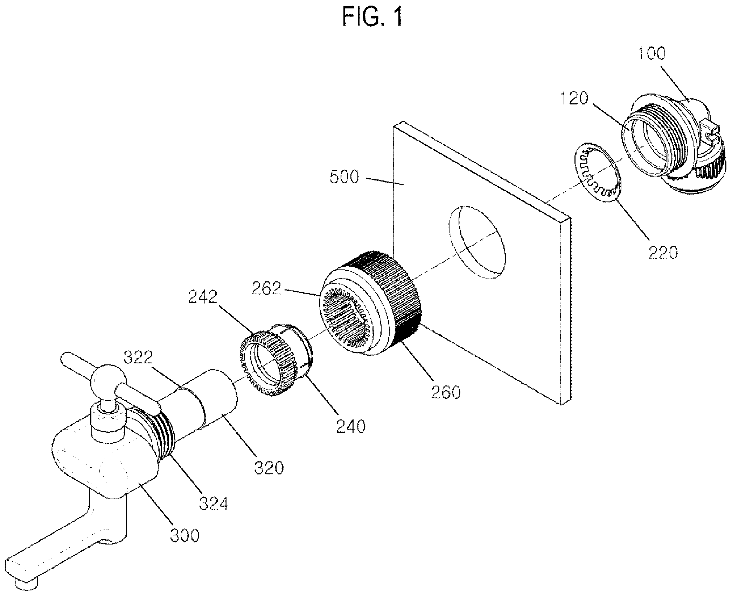

Hereinafter, the present invention will be described in detail with reference to **FIGS. 1** to **5****.**

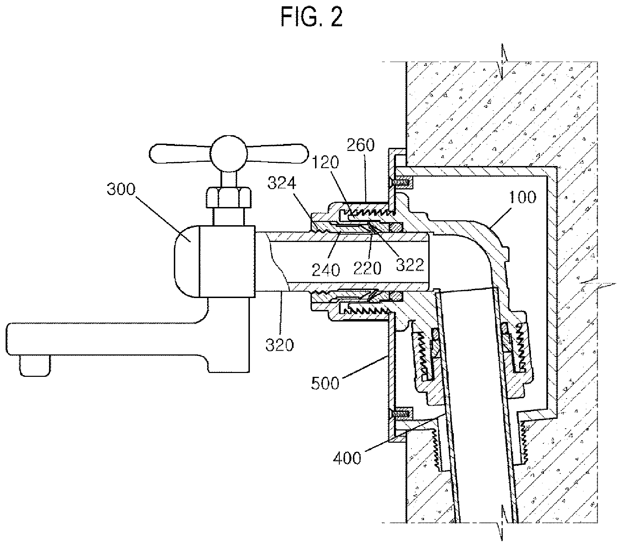

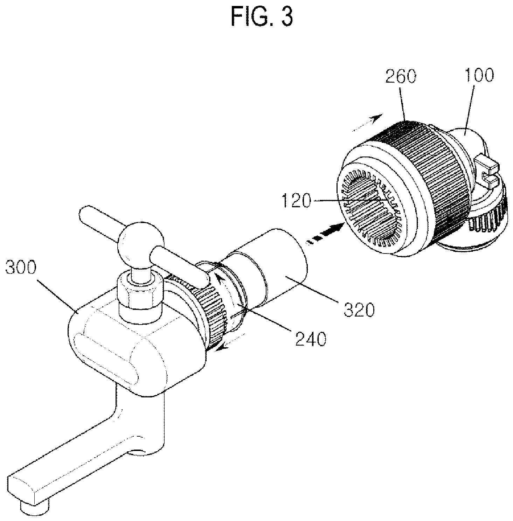

**FIG. 1** is an exemplary exploded view illustrating an installation structure for a faucet according to the present invention. **FIG. 2** is an exemplary sectional view illustrating the installation structure for a faucet according to the present invention. **FIG. 3** is an exemplary view illustrating coupling relationships between a faucet and a connection body, between a pressure ring and a coupling pipe, and between a coupler and a fastening nut, according to the present invention.

As shown in the drawings, the installation structure for a faucet according to the present invention is configured so that a faucet 300 which discharges water supplied through a water supply pipe 400 is connected to a connection body 100 which is connected to the water supply pipe 400. The connection body 100 is embedded in a wall and supplies water from a water source.

The connection body 100 is installed in an accommodation space formed in the wall, such that the connection body 100 is embedded in the wall so as not to be exposed to the outside. The accommodation space is positioned and formed by pouring concrete after previously installing a box-shaped housing having a predetermined dimension when building the wall. An opening of the accommodation space is formed to be covered with a cover plate 500. The cover plate 500 is mounted to the opening of the accommodation space by a threaded engagement or similar manner so that the cover plate 500 can maintain a securely coupled state without being separated.

A coupler 120 is formed in the connection body 100 has a coupler 120. The coupler 120 penetrates through the cover plate 500 fixed to the opening of the accommodation space to be exposed to the outside. A fastening nut 260 is fastened to the coupler 120 exposed to the outside, such that the connection body 100 is pulled toward the cover plate 500 and securely and tightly supported. Herein, the connection body 100 can also be fixed to the wall of the accommodation space by means of screws so that the connection body 100 can be fixed more securely.

A coupling pipe 320 is formed in the faucet 300. The coupling pipe 320 is inserted into the coupler 120. As such, the faucet 300 can be connected to the connection body 100 to supply water.

A grab ring 220 is installed in an interior of the coupler 120. The grab ring 220 is formed in a ring shape and has sawteeth protruding toward the center thereof. The sawteeth are inclined in a direction toward the interior of the coupler 120. The coupling pipe 320 penetrates through the grab ring 220 installed in the interior of the coupler 120. When the coupling pipe 320 is inserted into the coupler 120, a leading end of the coupling pipe 320 pushes the sawteeth with a forward movement of the coupling pipe 320 and then the coupling pipe 320 penetrates through the grab ring 220.

A catching projection 322 is formed in an outer periphery of the coupling pipe 320 which penetrates through the grab ring 220 such that, when tips of the sawteeth are caught by the catching projection 322, the coupling pipe 320 does not fall out of the coupler 120. In contrast, when the grab ring 220 expands, the sawteeth are released from the catching projection 322, such that the coupling pipe 320 can fall out of and be separated from the coupler 120.

The expansion of the grab ring 220 is implemented by a pressure ring 240. The pressure ring 240 is formed in a pipe shape and has a predetermined length. The pressure ring 240 is detachably installed in an outer periphery of the coupling pipe 320. Threads 324 are formed on the periphery of the coupling pipe 320 such that the pressure ring 240 is fastened to the coupling pipe 320 by a threaded engagement. The threads 324 are formed in a rear side (left side in the drawings) of the catching projection 322.

After the pressure ring 240 is inserted into the coupling pipe 320 in a direction from a leading end (right side in the drawings) of the coupling pipe 320 to a trailing end (left side in the drawings) of the coupling pipe 320, the pressure ring 240 is fastened to the threads 324. When the coupling pipe 320 is inserted into the coupler 120 with the pressure ring 240 fastened to the threads 324 as described above, the pressure ring 240 is also inserted into the coupler 120.

When the pressure ring 240 fastened to the coupling pipe 320 is moved forward (toward the right side in the drawings), the leading end of the pressure ring 240 pushes the sawteeth formed in the grab ring 220. Accordingly, the sawteeth are tilted and released from the catching projection 322, such that the coupling pipe 320 can fall out of and be separated from the coupler 120 by pulling the coupling pipe 320 backward (toward the left side in the drawings).

Moreover, a direction of the threads 324 is determined in the manner such that the pressure ring 240 threadedly engaged with the coupling pipe 320 can be tightened and moved backward while the faucet 300 is rotated in a direction opposite to a direction in which the fastening nut 260 is tightened. That is, if the fastening nut 260 is configured to be tightened while being rotated in a clockwise direction, the direction in which the fastening nut 260 is tightened and a direction in which the pressure ring 240 is tightened should be opposite to each other. The pressure ring 240 is also configured to be tightened to the coupling pipe 320 while rotating in a clockwise direction.

The pressure ring 240 is threadedly engaged with the coupling pipe 320 as described such that the outer periphery of the pressure ring 240 is engaged with an inner periphery of the fastening nut 260. Engagement protrusions 242 and 262 are formed in the outer periphery of the pressure ring 240 and the inner periphery of the fastening nut 260, respectively. The engagement protrusions 242 and 262 are engaged with one another in a state that one portion of the fastening nut 260 protrudes from an inlet of the coupler 120. The engagement protrusion 262 can be formed to protrude in tooth shapes.

The pressure ring 240 is formed such that one portion of the pressure ring 240 is divided in a longitudinal direction of the pressure ring 240 such that a diameter of the pressure ring 240 can be elastically reduced. With this configuration, although the pressure ring 240 is caught by the inlet of the coupler 120 or an inlet of the fastening nut 260 when the coupling pipe 320 is inserted into the coupler 120, the pressure ring 240 can be inserted into the coupler 120 or the fastening nut 260 while the diameter of the pressure ring 240 is elastically reduced. In this case, the outer periphery of the coupling pipe 320 can be recessed by a predetermined depth so as not to prevent the diameter of the pressure ring 240 from being elastically reduced.

With the aforementioned configuration, it is possible to couple the faucet 300 to the connection body 100 while the angle of the faucet 300 can be adjusted as desired. In a state that the connection body 100 is installed in the accommodation space, the cover plate 500 is fixed to the opening of the accommodation space and the fastening nut 260 is fastened to the coupler 120 which penetrates through the cover plate and thus is exposed to the outside. In this state, when the coupling pipe 320 in which the pressure ring 240 is installed is inserted into the coupler 120 in a state that the angle of the faucet 300 is adjusted as desired, the engagement protrusions 242 and 262, which are formed in the outer periphery of the pressure ring 240 and the inner periphery of the fastening nut 260, respectively, are engaged with each other. At this time, the leading end of the coupling pipe 320 penetrates through the grab ring 220, such that the grab ring 220 is caught by the catching projection 322. Thus, the coupling pipe 320 does not fall out of the coupler 120, and it is possible to prevent the faucet 300 from being rotated by the engagement protrusions 242 and 262. As a result, the faucet 300 can be conveniently installed at a desired angle.

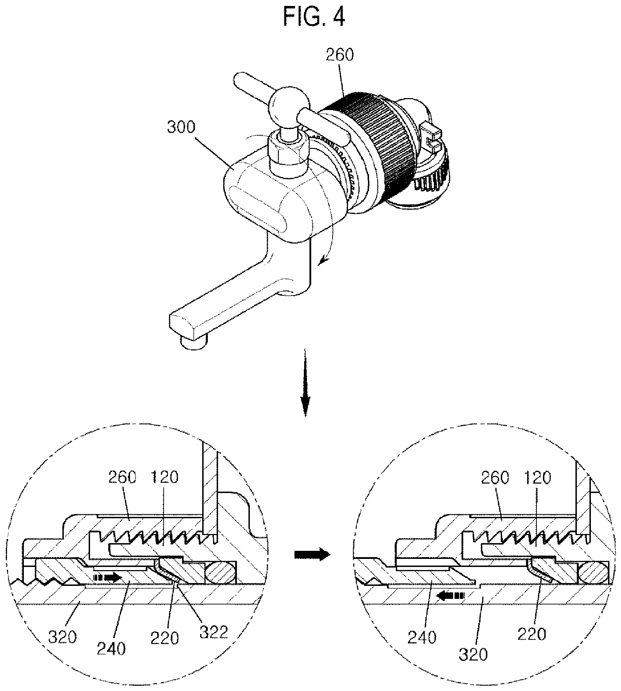

**FIG. 4** is an exemplary view illustrating an operation of separating the coupling pipe from the coupler by rotating the faucet according to the present invention.

As described above, the faucet 300 is not separated from the connection body 100 by simply pulling the faucet 300 in a state that the faucet 300 is coupled to the connection body 100 by inserting the coupling pipe 320 into the coupler 120. The faucet 300 is not separated from the connection body 100 because the grab ring 220 is caught by the catching projection 322.

In this state, when the faucet 300 is held and rotated by hand in a direction in which the fastening nut 260 is tightened, that is, a clockwise direction, the pressure ring 240 is moved forward. The faucet 300 is securely held and rotated by hand without using an additional tool.

More specifically, the faucet 300 is rotated in a clockwise direction until the fastening nut 260 is completely tightened. When the fastening nut 260 is completely tightened, the fastening nut 260 cannot be rotated any further. In this state, since the pressure ring 240 is engaged with the fastening nut 260, only the coupling pipe 320 can be rotated such that the rotation of the fastening nut 260 is prevented. Then, a force in the direction in which the pressure ring 240 is loosened is applied to the pressure ring 240 which is threadedly engaged with the coupling pipe 320. As a result, the pressure ring 240 is moved forward toward the grab ring 220.

When the pressure ring 240, which has been moved forward as described above, pushes and expands the grab ring 220, the grab ring 220 is released from the catching projection 322. In this state, when the faucet 300 is pulled backward, the coupling pipe 320 falls out and is separated from the coupler 120. As a result, the faucet 300 is separated from the coupler 120.

When the faucet 300 is separated as described above, the angle of the faucet 300 is adjustable as desired. Thereafter, the coupling pipe 320 is inserted into the coupler 120, such that the angle of the faucet 300 can be conveniently adjusted.

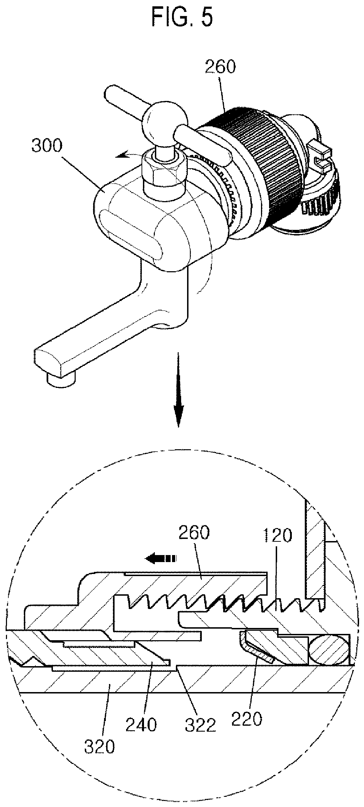

**FIG. 5** is an exemplary view illustrating an operation of separating the fastening nut from the coupler by rotating the faucet according to the present invention.

When the faucet 300 is rotated in the direction in which the fastening nut 260 is loosened, that is, counterclockwise, the fastening nut 260 can be separated from the coupler 120.

To this end, the faucet 300 is rotated in a clockwise direction as described above so that the pressure ring 240 pushes and expands the grab ring 220. Thereafter, in a state that the grab ring 220 is not again caught by the catching projection 322 and the pressure ring 240 and the fastening nut 260 are engaged with each other by pulling the faucet 300 backward to a specific degree, the faucet 300 is rotated in a counterclockwise direction.

When the faucet 300 is rotated in a counterclockwise direction, a force in the direction in which the pressure ring 240 is tightened is applied to the pressure ring 240. Thus, the pressure ring 240 does not run idle and is rotated together with the fastening nut 260. As a result, the pressure ring 240 is rotated and loosened together with the fastening nut 260 engaged with the pressure ring 240.

According to the present invention as described above, since the faucet can be installed by an insertion manner in a state that an angle of the faucet is adjusted as desired, it is possible to install the faucet while an angle of the faucet is being adjusted as desired. Further, since the faucet can be separated by holding and thus inserting or rotating the faucet by hand, it is possible to install and separate the faucet without any additional tool.

### EXPLANATION OF REFERENCE NUMERALS

100: connection body, 120: coupler
220: grab ring, 240: pressure ring
242: engagement protrusion, 260: fastening nut
262: engagement protrusion, 300: faucet
320: coupling pipe, 322: catching projection
340: actuation nut, 400: water supply pipe
500: cover plate

## Claims

1. An installation structure for a faucet, comprising:
a coupler 120 formed in a connection body 100 which connects a water supply pipe 400 and a faucet 300 so as to be communicated with each other;
a fastening nut 260 being fastened to the coupler 120;
a coupling pipe 320 formed in the faucet 300 to be inserted into the coupler 120 such that the faucet 300 is connected to the connection body 100;
a grab ring 220 installed in an interior of the coupler 120, the grab ring 220 holding the coupling pipe 320 so that the coupling pipe 320 does not fall out of the coupler 120;
a pressure ring 240 being threadedly engaged with the coupling pipe 320 so as to be tightened when the faucet 300 is rotated in a direction opposite to a direction in which the fastening nut 260 is tightened; and
an engagement protrusion 242 formed in an outer periphery of the pressure ring 240, the engagement protrusion 242 being engaged with an engagement protrusion 262 formed in an inner periphery of the fastening nut 260 such that the fastening nut 260 and the pressure ring are engaged with each other,
wherein the faucet 300 is inserted into the coupler 120 in a state that the pressure ring 240 is coupled to the coupling pipe 320 to be coupled to the connection body 100,
wherein, when the faucet 300 is rotated in the direction in which the fastening nut 260 is tightened, the pressure ring 240 is loosened from threads 324 formed in the coupling pipe 320 and is moved forward to expand the grab ring 220, such that the coupling pipe 320 can be separated from the coupler 120, and
wherein, when the faucet 300 is rotated in a direction in which the fastening nut 260 is loosened, the pressure ring 240 is completely tightened to the threads 324 formed in the coupling pipe 320 to be engaged with the fastening nut 260 and rotated together with the fastening nut 260, such that the fastening nut 260 is loosened.

2. The installation structure for a faucet of claim 1, wherein a catching projection 322 is formed in an outer periphery of the coupling pipe 320, and
wherein the grab ring 220 is caught by the catching projection 322 such that the coupling pipe 320 does not fall out of the coupler 120.

3. The installation structure for a faucet of claim 1, wherein the pressure ring 240 is formed so that one portion of pressure ring 240 is divided in a longitudinal direction of the pressure ring 240 such that a diameter of the pressure ring 240 can be elastically reduced.
